# EUROPÄISCHE PATENTANMELDUNG

(11) **EP 0 738 554 A2**
(43) Veröffentlichungstag der Anmeldung: **23.10.1996**
(21) Anmeldenummer: 96103631.6
(22) Anmeldetag: 08.03.1996
(51) Int. Cl.: B23B 31/02

(54) **Klemmhalter für Gewindebohrer**

(30) Priorität: 04.04.1995 DE 19512556
(71) Anmelder: Baumgärtner, Peter, D-73072 Donzdorf (DE); Wieland, Karl, 73072 Donzdorf (DE)
(72) Erfinder: Baumgärtner, Peter, D-73072 Donzdorf (DE); Wieland, Karl, 73072 Donzdorf (DE)
(74) Vertreter: Seemann, Norbert W., Dipl.-Ing.

(57) **Zusammenfassung**

Ein Klemmhalter für Gewindebohrer besitzt eine Ausgestaltung als zylindrische Hülse 1 mit zentrischer Bohrung 2 zur Aufnahme des Werkzeugschaftes W, mindestens einem von der Hülsenfrontseite 1a ausgehenden Längsschlitz 3, endseitig 1b angebrachtem Querschlitz 4 als Mitnahme- und Verdrehsicherung für das Werkzeug W sowie einer Spannfläche 5 nach DIN 1835 B am Hülsenumfang.

## Beschreibung

Die Erfindung bezieht sich auf einen Klemmhalter für Gewindebohrer bei der maschinellen, spanabhebenden Metallbearbeitung; dem neuen Bauteil liegt dabei die Aufgabe zugrunde, das System des sog. Micro-Spannfutters nach der EP-PS 0 481 220 der gleichen Anmelder für die hier zur Rede stehenden Bearbeitungsvorgänge nutzbar zu machen.

Die Lösung dieser Aufgabe ist dem Patentanspruch 1 zu entnehmen; die beiden Unteransprüche beinhalten mögliche Alternativen dazu. Die Zeichnung zeigt in
- Fig. 1: den neuen Klemmhalter in Seitenansicht und
- Fig. 2: ebenfalls in Seitenansicht eine Alternativausführung.

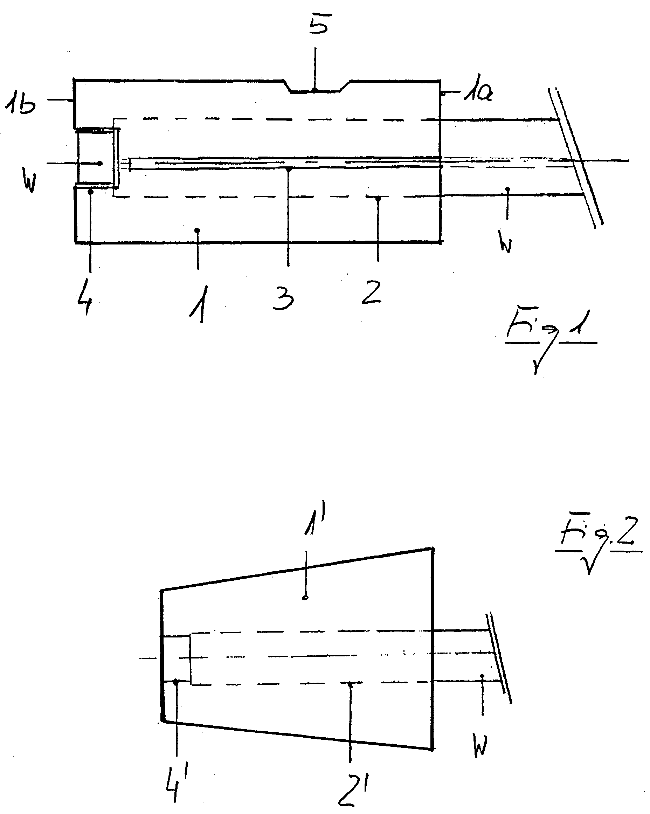

Der in Fig. 1 dargestellte, neue Klemmhalter für Gewindebohrer zeichnet sich vor allem aus durch seine Ausführung als zylindrische Hülse 1 mit zentrischer Bohrung 2 zur Aufnahme des Werkzeugschaftes W, mindestens einem von der Hülsenfrontseite 1a ausgehenden Längsschnit 3, endseitig 1b angebrachtem Querschlitz 4 als Mitnahme- und Verdrehsicherung für das Werkzeug W sowie einer Spannfläche 5 nach DIN 1835 B am Hülsenumfang. Die Alternative nach Fig. 2 hat die gleiche technische Lehre, baulich jedoch in Ausbildung als sog. Spannzange mit konischer Hülse 1' und endseitigem Querschlitz 4. Für beide Ausführungen kann dabei anstelle diesen Querschlitzes auch eine Ausgestaltung der endseitigen Werkzeug-Mitnahme- bzw. Verdrehsicherung als zentrische Vierkantöffnung 4' vorgesehen werden.

Die großen Vorteile dieses neuen Klemmhalters liegen vor allem in folgenden Punkten:
1. Die neue Hülse ermöglicht durch ihre schlanke Bauweise ein problemloses Arbeiten an verdeckten oder tiefer liegenden, schwer zugänglichen, Zonen eines Werkstückes und
2. ist eine ungehinderte Kühlmittelzufuhr von innen wie außen gewährleistet.

### Bezugsziffernverzeichnis

- 1: zylindrische Hülse (Fig. 1)
- 1a: Frontseite
- 1b: Endseite
- 1': konische Hülse (Fig. 2)
- 2: zentrische Bohrung (Fig. 1)
- 2': zentrische Bohrung (Fig. 2)
- 3: Längsschlitz
- 4: Querschlitz (Fig. 1)
- 4': Vierkantöffnung (Fig. 2)
- 5: Spannfläche
- W: Werkzeugschaft

## Patentansprüche

1. Klemmhalter für Gewindebohrer (W),
**gekennzeichnet durch**
Ausführung als zylindrische Hülse (1) mit zentrischer Bohrung (2) zur Aufnahme des Werkzeugschaftes (W), mindestens einem von der Hülsenfrontseite (1a) ausgehenden Längsschlitz (3), endseitig (1b) angebrachtem Querschlitz (4) als Mitnahme- und Verdrehsicherung für das Werkzeug (W) sowie einer Spannfläche (5) nach DIN 1835 B am Hülsenumfang. (Fig. 1).

2. Klemmhalter für Gewindebohrer,
**gekennzeichnet durch**
Ausbildung als sog. Spannzange mit konischer Hülse (1') und endseitigem Querschlitz (4).

3. Klemmhalter nach den Ansprüchen 1 oder 2,
**gekennzeichnet durch**
Ausbildung der endseitigen Werkzeug-Mitnahme- bzw. Verdrehsicherung als zentrische Vierkantöffnung (4').
